# EUROPEAN PATENT APPLICATION

(11) **EP 2 246 614 A2**
(43) Date of publication of application: **03.11.2010**
(21) Application number: 10161099.6
(22) Date of filing: 27.04.2010
(51) Int. Cl.: F21V 14/08

(54) **Vehicle headlamp apparatus**

(30) Priority: 28.04.2009 JP 2009109921
(71) Applicant: Koito Manufacturing Co., Ltd., Tokyo 108-8711 (JP)
(72) Inventor: Ohshio, Hirohiko, Shizuoka-shi Shizuoka (JP)
(74) Representative: Grünecker, Kinkeldey, Stockmair & Schwanhäusser Anwaltssozietät

(57) **Abstract**

A vehicle headlamp apparatus includes: a light source; a projection lens; a first shade; a second shade; a third shade; and a pattern controller that determines the shape of a light distribution pattern to be formed, by controlling the advance and retreat positions of the first shade, the advance and retreat positions of the second shade, and the advance and retreat positions of the third shade.

## Description

### CROSS REFERENCE TO RELATED APPLICATION(S)

The present disclosure relates to the subject matters contained in Japanese Patent Application No. 2009-109921 filed on April 28, 2009, which are incorporated herein by reference in its entirety.

### BACKGROUND

### 1. Field

The present invention relates to a vehicle headlamp apparatus that is capable of projecting a plurality of types of light distribution patterns by using shades.

### 2. Description of the Related Art

A vehicle headlamp apparatus is configured to emit a low beam or a high beam by projecting light directly to the front side from a light source, or by reflecting light emitted from a light source to the front side. As one of methods of switching a beam into the low beam and the high beam with a single light source configuration, there has been proposed a method of moving a light blocking member, which is called a shade, in accordance with a light distribution pattern that is intended to be formed. For example, a vehicle headlamp apparatus disclosed in JP-A-2001-110213 is configured to switch a pattern into a light distribution pattern for a low beam and a light distribution pattern for a high beam by moving a shade between two points, which have different values of the amount of blocked light, with a beam switching unit.

Meanwhile, as the performance and functions of a vehicle have been improved in recent years, it is expected that a headlamp device forms light distribution patterns capable of coping with various circumstances. For example, there is considered a device that includes a plurality of shades capable of advancing to and retreating from a light blocking position and moves a shade for selectively forming a light distribution pattern having a desired shape to the light blocking position. In this case, there is required the structure that makes the respective shades advance and retreat without mechanical interference. Further, since the vehicle headlamp apparatus guides light to a front illumination area through a projection lens, it has been necessary to position an edge portion of a shade, which determines a cut-off line forming a line between dark and bright areas of a light distribution pattern, at a rear focus position of the projection lens. If the edge portion of the shade is deviated to the front or back side from the rear focus position, the blurring of an outline of a cut-off line may be generated. Further, a balance between blocked light and unblocked light may be lost, and coloring caused by a spectral component of light might be generated at an area near the cut-off line. Accordingly, in a case where a plurality of shades are used, an appropriate solution for eliminating these problems may be required.

### SUMMARY

One of objects of the present invention is to provide a vehicle headlamp apparatus that is capable of suppressing a blurring of outlines or coloring of a light distribution pattern to be formed while not causing mechanical interference for a configuration having a plurality of shades.

According to an aspect of the invention, there is provided a vehicle headlamp apparatus including: a light source that emits light; a projection lens that projects the light toward a front area of a vehicle; a first shade that is configured to advance to and retreat from an optical axis of the light source, the first shade forming a part of the shape of a light distribution pattern for a low beam in at least an opposite lane area by blocking a part of light emitted from the light source at an advanced position being set at a rear focus position of the projection lens, and allowing a light distribution pattern for a high beam to be formed at a retreat position; a second shade that is configured to advance to and retreats from the optical axis of the light source, the second shade forming a part of the shape of a light distribution pattern for a low beam in at least a running lane area by blocking a part of light emitted from the light source at an advanced position being set at the rear focus position of the projection lens, and allowing a light distribution pattern for a high beam to be formed at a retreat position; a third shade that is configured to advance to and retreat from the optical axis of the light source, the third shade forming a part of the shape of at least a light distribution pattern for a low beam by blocking a part of light emitted from the light source at an advanced position that includes the rear focus position of the projection lens, and allowing a light distribution pattern for a high beam to be formed at a retreat position; and a pattern controller that determines the shape of a light distribution pattern to be formed, by controlling the advance and retreat positions of the first shade, the advance and retreat positions of the second shade, and the advance and retreat positions of the third shade, wherein the first shade is arranged in a vehicle width direction so as to freely advance to and retreat from the optical axis while being in a first inclined posture, wherein the second shade is arranged in a vehicle width direction so as to freely advance to and retreat from the optical axis while being in a second inclined posture, and wherein at least one of the first and second shades has a width in the vehicle width direction so as to block the light over a middle area of the light distribution pattern for a low beam to be formed.

### BRIEF DESCRIPTION OF THE DRAWINGS

A general configuration that implements the various feature of the invention will be described with reference to the drawings. The drawings and the associated descriptions are provided to illustrate embodiments of the invention and not to limit the scope of the invention.
Fig. 1 is a view showing a schematic configuration of a vehicle headlamp apparatus according to an embodiment including a lamp unit that includes a first shade, a second shade, and a third shade.
Fig. 2 is a view showing a detailed structure of an adaptive shade unit of the embodiment.
Fig. 3 is a view showing the shapes and operation of the first to third shades that are included in the vehicle headlamp apparatus according to the embodiment.
Fig. 4 is a view illustrating inclined postures of the first and second shades that are included in the vehicle headlamp apparatus according to the embodiment.
Fig. 5 is a view showing the shapes of light distribution patterns that are formed through the combination of the first to third shades included in the vehicle headlamp apparatus according to the embodiment.
Fig. 6 is a functional block diagram illustrating the configuration of a headlamp device control unit of the vehicle headlamp apparatus according to the embodiment and a vehicle control unit mounted on a vehicle.
Fig. 7 is a view showing the detailed structure of another adaptive shade unit of the vehicle headlamp apparatus according to the embodiment.
Fig. 8 is a view showing the shapes and operation of first to third shades shown in Fig. 7.
Fig. 9 is a view showing the shapes of light distribution patterns that are formed by the shapes of the shades shown in Fig. 8.

### DETAILED DESCRIPTION OF THE EMBODIMENT(S)

An embodiment according to the present invention will be described in detail with reference to the accompanying drawings. The scope of the claimed invention should not be limited to the examples illustrated in the drawings and those described below.

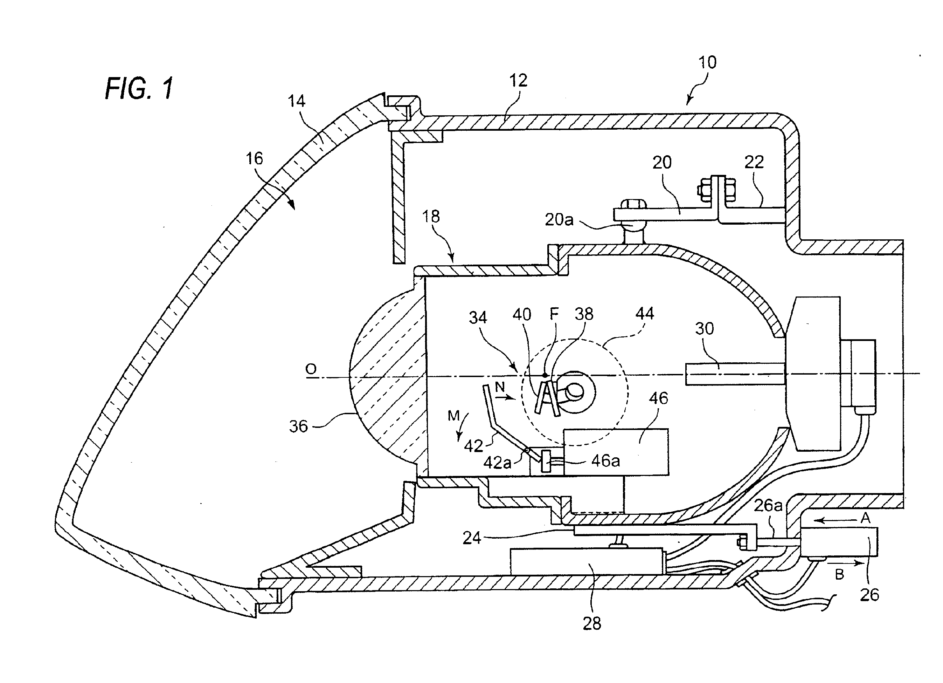

Fig. 1 is a view showing the schematic configuration of a vehicle headlamp apparatus 10 according to an embodiment including a lamp unit that includes a first shade, a second shade, and a third shade. An example of a vehicle headlamp apparatus of a vehicle, which is generally used in a region where drivers should keep to the left according to traffic regulations, will be described below. Accordingly, in the case of alternate traffic on the left and right sides, a left lane will be described as a running lane and a right lane will be described as an opposite lane.

A vehicle headlamp apparatus 10 shown in Fig. 1 is a vehicle headlamp apparatus called a so-called adaptive front-lighting system configured by a pair of headlamps disposed on left and right portions of a vehicle in a vehicle width direction. The vehicle headlamp apparatus 10 includes a lamp room 16 that is formed by a lamp body 12 and a transparent cover 14. The lamp room includes an opening that is formed so as to be opened toward the front side of a vehicle, and the transparent cover covers the opening of the lamp body 12. A lamp unit 18, which irradiates light toward the front side of the vehicle, is received in the lamp room 16. A lamp bracket 20 including a pivot mechanism 20a, which functions as a swiveling center of the lamp unit 18, is formed at a part of the lamp unit 18. The lamp bracket 20 is connected to a body bracket 22, which is erected on an inner wall surface of the lamp body 12, by a fastening member such as a bolt. Accordingly, the lamp unit 18 is fixed at a predetermined position in the lamp room 16, and the lamp unit may swivel about the pivot mechanism 20a so that the posture of the lamp unit varies to, for example, a forward inclined posture or a backward inclined posture.

A unit bracket 24, which supports the lamp unit 18 from below, is fixed to the lower surface of the lamp unit 18. A leveling actuator 26, which is disposed outside the lamp body 12, is connected to the unit bracket 24. For example, the leveling actuator 26 is formed of a motor or the like that pushes and pulls a rod 26a in directions of arrows A and B. If the rod 26a is pushed in the direction of the arrow A, the lamp unit 18 swivels about the pivot mechanism 20a so as to be in the backward inclined posture. In contrast, if the rod 26a is pulled in the direction of the arrow B, the lamp unit 18 swivels about the pivot mechanism 20a so as to be in the forward inclined posture. When the lamp unit 18 is in the backward inclined posture, it may be possible to perform leveling adjustment for making an optical axis be directed to the upper side. Further, when the lamp unit 18 is in the forward inclined posture, it may be possible to perform leveling adjustment for making an optical axis be directed to the lower side. Meanwhile, a headlamp device control unit 28, which controls the turning-on/off of the lamp unit 18 or controls the formation of a light distribution pattern, is disposed on an inner wall surface of the lamp room 16, for example, at a position below the lamp unit 18. The headlamp device control unit 28 also controls the leveling actuator 26.

The lamp unit 18 may include an aiming adjustment mechanism. For example, an aiming pivot mechanism, which functions as a swiveling center during aiming adjustment, is disposed at a connection portion between the unit bracket 24 and the rod 26a of the leveling actuator 26. Further, a pair of aiming adjustment screws, which advances and retreats in a longitudinal direction of a vehicle, is disposed at an interval in the vehicle width direction at a connection portion between the body bracket 22 and the lamp bracket 20. For example, if the two aiming adjustment screws are pushed forward, the lamp unit 18 swivels about the aiming pivot mechanism so as to be in the forward inclined posture. Accordingly, an optical axis is adjusted so as to be directed to the lower side. Likewise, if the two aiming adjustment screws are pulled back, the lamp unit 18 swivels about the aiming pivot mechanism so as to be in the backward inclined posture. Accordingly, an optical axis is adjusted so as to be directed to the upper side. Furthermore, if the aiming adjustment screw, which is disposed on the left side in the vehicle width direction, is pushed forward, the lamp unit 18 swivels about the aiming pivot mechanism so as to be in a right swiveling posture. Accordingly, an optical axis is adjusted so as to be directed to the right side. Moreover, if the aiming adjustment screw, which is disposed on the right side in the vehicle width direction, is pushed forward, the lamp unit 18 swivels about the aiming pivot mechanism so as to be in a left swiveling posture. Accordingly, an optical axis is adjusted so as to be directed to the left side. This aiming adjustment is performed at the time of the shipment of vehicles, the detection of vehicles, or the replacement of the vehicle headlamp apparatus 10. Further, the vehicle headlamp apparatus 10 is adjusted to a posture that is prescribed in design, and the formation of the light distribution pattern of the embodiment is performed on the basis of this posture. Meanwhile, it may be possible to achieve a swivel function by automatically performing the aiming adjustment on the basis of the running state or the turning state of a vehicle. Further, an adaptive front-lighting system (AFS) for a curved road, which illuminates in a running direction while a vehicle runs on a curved road, may be configured by using the swivel function.

The lamp unit 18 includes a bulb 30, a reflector 32, an adaptive shade unit 34, and a projection lens 36. For example, an incandescent bulb, a halogen lamp, a discharge bulb, an LED, or the like may be used as the bulb 30 that is a light source. In the embodiment, the bulb 30 formed of a halogen lamp is shown as an example. The reflector 32 reflects light, which is emitted from the bulb 30, and guides the light to the projection lens 36. The light, which is reflected by the reflector 32, is partially blocked by the shade shape that is determined by at least one of a first shade 38, a second shade 40, and a third shade 42 that have the shape of a plate and form the adaptive shade unit 34. Accordingly, the light, which is reflected by the reflector, forms a light distribution pattern corresponding to the shade shape.

The first shade 38 is a plate-shaped shade that can advance to and retreat from an optical axis of the bulb 30. The first shade forms a part of the shape of a light distribution pattern for a low beam in at least an opposite lane area by blocking a part of the light emitted from the bulb 30 at a rear focus position F of the projection lens 36 as an advanced position. Further, the first shade 38 allows a light distribution pattern for a high beam to be formed at a retreat position. The second shade 40 is a plate-shaped shade that can advance to and retreat from the optical axis of the bulb 30. The second shade forms a part of the shape of a light distribution pattern for a low beam in at least a running lane area by blocking a part of the light emitted from the bulb 30 at the rear focus position F of the projection lens 36 as the advanced position. Further, the second shade 40 allows a light distribution pattern for a high beam to be formed at the retreat position. Furthermore, the third shade 42 is also a plate-shaped shade that can advance to and retreat from the optical axis of the bulb 30. The third shade forms a part of the shape of at least a light distribution pattern for a low beam by blocking a part of the light emitted from the bulb 30 at the advanced position that includes the rear focus position F of the projection lens 36. Moreover, the third shade 42 allows a light distribution pattern for a high beam to be formed at the retreat position.

In the embodiment, the first and second shades 38 and 40 can interact with each other by, for example, a link mechanism that is operated by a shade motor 44. The link mechanism moves any one of the first and second shades 38 and 40 to the rear focus position F of the projection lens 36, which is the advanced position, according to the posture thereof, and makes the one of the first and second shades block light. Further, the link mechanism moves one or both of the first and second shades 38 and 40 to the retreat position by another posture, and makes one or both of the first and second shades not block light. The third shade 42 can advance and retreat by, for example, a shade solenoid 46. When a rod 46a is received in the shade solenoid 46, the third shade is rotated about a rotating shaft 42a in a direction of an arrow M and is moved to the retreat position. Further, when the rod 46a protrudes from the shade solenoid 46, the third shade is rotated about the rotating shaft 42a in a direction of an arrow N, is moved to the advanced position, and is stopped at a stopping position that includes the rear focus position F.

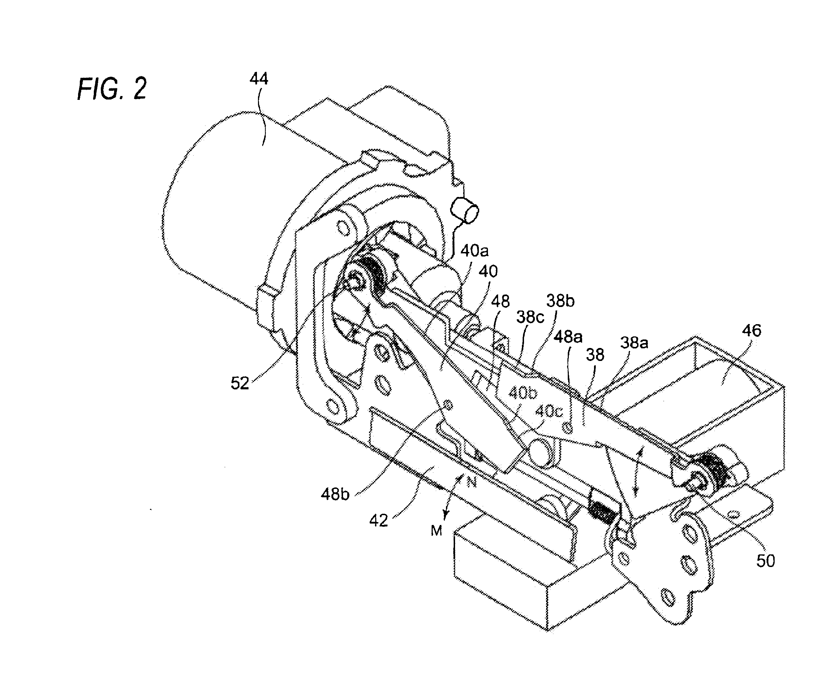

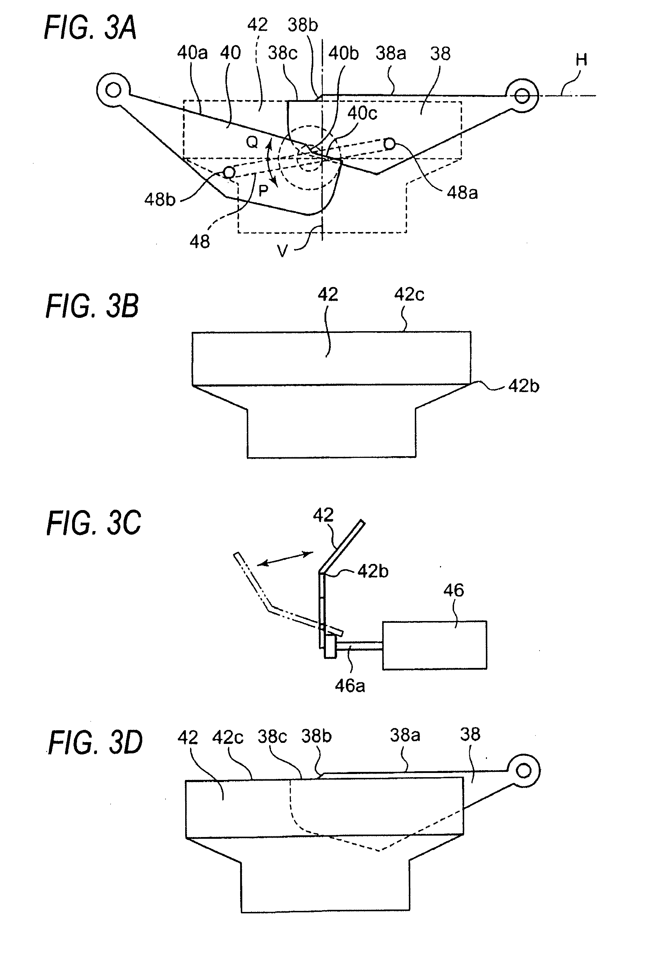

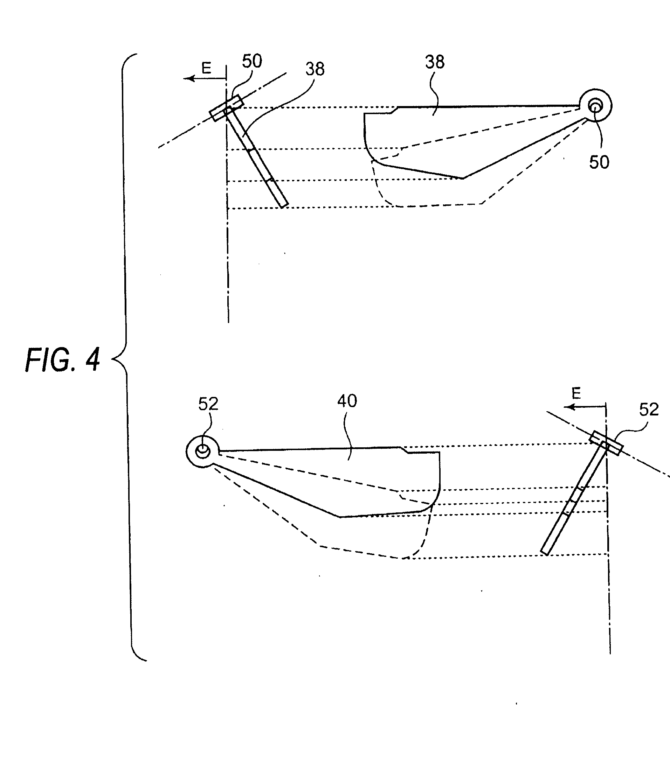

Fig. 2 is a view showing the detailed structure of the adaptive shade unit 34. Further, Figs. 3 and 4 are views showing the shapes, postures, and driving system of the respective shades. Meanwhile, Figs. 3A, 3B, and 3D are views of the respective shades when the shades are seen from the front side of the vehicle headlamp apparatus 10 toward the bulb 30. Fig. 2 shows that the first shade 38 is moved to the advanced position and the second and third shades 40 and 42 are moved to the retreat position.

The first shade 38 is a shade that forms a part of the shape of a light distribution pattern for a low beam in at least the opposite lane area by blocking a part of the light emitted from the bulb 30 as described above. In the case of the example shown in Fig. 2, the first shade 38 has a width in the vehicle width direction so as to block light at a part of the running lane area over the middle area of the light distribution pattern for a low beam. The light distribution pattern for a low beam has a cut-off line that is a clear light-dark boundary defining an upper limit of light distribution. A portion below the cut-off line is a bright area, a portion above the cut-off line is a dark area, and the cut-off line is a boundary that divides the light distribution pattern into the bright and dark areas. A cut-off line of a vehicle headlamp apparatus of a vehicle, which is used in a region where drivers should keep to the left according to traffic regulations, includes, for example, a right portion that horizontally extends below a horizontal line traversing an optical axis on the right side in the vehicle width direction, a left portion that horizontally extends slightly above the right portion on the left side in the vehicle width direction, and a middle portion that is inclined upward to the left side and connects the right portion with the left portion. An inclination angle of the middle portion is, for example, 45 degrees.

As shown in Fig. 1, the projection lens 36 of the embodiment is a plano-convex aspheric lens of which the front surface is a convex surface and the rear surface is a flat surface. Accordingly, a light source image formed on the rear focal plane F is projected on a virtual vertical screen, which is formed on the front side of a vehicle, as an inverted image that is inverted vertically and horizontally. Accordingly, the first shade 38 shown in Figs. 2 and 3A forms a cut-off line by a horizontal portion 38a that corresponds to the opposite lane area, an inclined portion 38b that is a middle portion, and a horizontal portion 38c that corresponds to a part of the running lane area over the inclined portion.

Likewise, the second shade 40 is a shade that forms a part of the shape of a light distribution pattern for a low beam in at least the running lane area by blocking a part of the light emitted from the bulb 30 as described above. In the case of the example shown in Fig. 2, the second shade 40 has a width in the vehicle width direction so as to block light at a part of the opposite lane area over the middle area of the light distribution pattern for a low beam. Accordingly, the second shade 40 shown in Figs. 2 and 3A forms a cut-off line by a horizontal portion 40a that correspond to the running lane area, an inclined portion 40b, and a horizontal portion 40c that corresponds to a part of the opposite lane area over the inclined portion.

The third shade 42 is a shade that forms a part of the shape of at least a light distribution pattern for a low beam by blocking a part of the light emitted from the bulb 30 as described above. The third shade is a plate-shaped member that has a bent portion 42b near the middle thereof in a longitudinal direction as shown in Figs. 3B and 3C. When the third shade is moved to the advanced position while avoiding the interference with a drive mechanism of the first shade 38 or the second shade 40 by the bent shape as shown in Fig. 1, the third shade may be moved to a position including the rear focus position F. An edge portion 42c, which forms a part of the cut-off line when the third shade 42 has been moved to the advanced position, has a horizontal shape over the entire width as shown in Figs. 3A and 3D. For example, the edge portion is formed so as to be flush with the horizontal portion 38c that forms a part of the running lane area when the first shade 38 is moved to the advanced position. Likewise, the edge portion is formed so as to be flush with the horizontal portion 40c that forms a part of the opposite lane area when the second shade 40 is moved to the advanced position.

As shown in Fig. 3A, working points 48a and 48b of a link arm 48 of the link mechanism, which is driven by the shade motor 44, are connected to the first and second shades 38 and 40. If the link arm 48 is rotated in a direction of an arrow P, the first shade 38 is moved to the advanced position and the second shade 40 is moved to the retreat position. Further, if the link arm 48 is rotated in a direction of an arrow Q, the second shade 40 is moved to the advanced position and the first shade 38 is moved to the retreat position. Meanwhile, the first and second shades 38 and 40 should be accurately stopped at the advanced position in order to form an accurate cut-off line. For this purpose, it is preferable that the link arm 48 include stoppers for limiting the rotation thereof in the directions of the arrows P and Q. Further, as another example, the link arm may include stoppers that stop the first and second shades 38 and 40.

As shown in Fig. 3C, the posture of the third shade 42 is switched between an upraised posture and a reclined posture as the rod 46a of the shade solenoid 46 advances and retreats. In the case of Fig. 3C, the upraised posture is a posture that makes the third shade 42 be moved to the advanced position and the reclined posture is a posture that makes the third shade 42 be moved to the retreat position. In this case, the shade solenoid 46 may preferably be a solenoid that includes a built-in spring so as to protrude the rod 46a while the solenoid is not controlled. In this case, if the shade motor 44 is inoperative due to a certain reason, it may be possible to move the third shade 42 to the advanced position regardless of the position of the first or second shade 38 or 40 only by stopping the control of the shade solenoid 46. If the third shade 42 is moved to the advanced position, substantially the same light distribution pattern as the light distribution pattern for a low beam is obtained by the horizontal portion 42c. Accordingly, it may be possible to form a light distribution pattern that hardly gives any glare to oncoming vehicles or pedestrians. That is, it may be possible to achieve a fail-safe function.

Meanwhile, in any case of the first and second shades 38 and 40 of the embodiment, the rear focus position F of the projection lens 36 is set as the advanced position. For this reason, if being simply moved in a vertical direction, the first and second shades 38 and 40 interfere with each other. As shown in Figs. 1 and 4A, the first shade 38 of the embodiment is disposed in the vehicle width direction so as to freely advance to and retreat from the optical axis O while being in a first inclined posture. Likewise, the second shade 40 is disposed in the vehicle width direction so as to freely advance to and retreat from the optical axis O while being in a second inclined posture that corresponds to an angle different from an angle corresponding to the first inclined posture. Meanwhile, the angles corresponding to the first and second inclined postures may be in the range of about several to 15 degrees with respect to a vertical line.

In the case of the embodiment, the first and second shades 38 and 40 are supported by rotating shafts 50 and 52, respectively, like a cantilever, and are moved between the advanced position and the retreat position by the arc-shaped motions. If the rotating shaft 50 of the first shade 38 is disposed so as to be in a depressing posture toward the front side E of a vehicle, the first shade 38 may also be moved while being in a depressing posture. In this case, the first shade 38 is moved so as to approach the rear focus position F of the projection lens 36 as approaching the advanced position, and is moved so as to become distant from the rear focus position F as approaching the retreat position. Likewise, if the rotating shaft 52 of the second shade 40 is disposed so as to be in an elevating posture toward the front side E of a vehicle, the second shade 40 may also be moved in an elevating posture. Even in this case, the second shade 40 is moved so as to approach the rear focus position F of the projection lens 36 as approaching the advanced position, and is moved so as to become distant from the rear focus position F as approaching the retreat position. As a result, the first and second shades 38 and 40 do not interfere with each other, and may be moved while using the rear focus position F as the advanced position. Further, since the first and second shades 38 and 40 do not interfere with each other, the selection ranges of the advance and retreat trajectories of the third shade 42 are widened and it may be possible to easily make the third shade 42 advance and retreat so that the first and second shades do not interfere with each other.

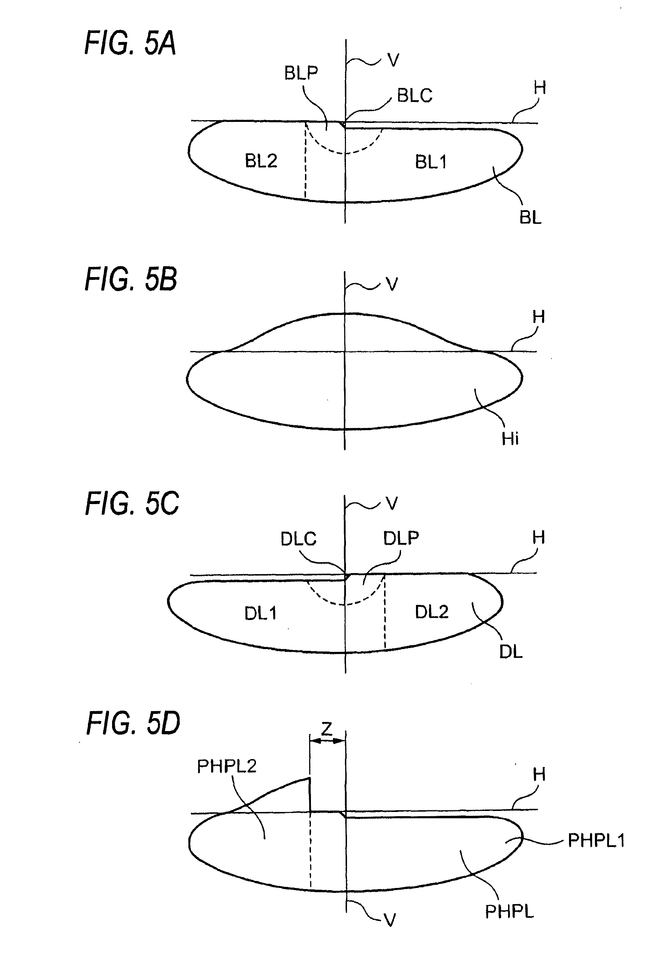

An example where light distribution patterns are formed by the first, second, and third shades 38, 40, and 42 having the above-mentioned structure will be described. Meanwhile, Figs. 5A to 5D are views showing the shapes of light distribution patterns that are formed by the combination of the first shade 38, the second shade 40, and the third shade 42.

Fig. 5A shows a light distribution pattern suitable in a case where, for example, preceding vehicles exist on the front side of a subject vehicle running on a running lane at a position close to the subject vehicle and oncoming vehicles or pedestrians exist on an opposite lane in a region where drivers should keep to the left according to traffic regulations. This light distribution pattern is a light distribution pattern that is called light distribution pattern BL for a basic low beam. In this case, the first and third shades 38 and 42 are moved to the advanced position and the second shade 40 is moved to the retreat position. That is, the first and third shades are in a state shown in Fig. 3D. The light distribution pattern BL for a basic low beam is formed by the first shade 38 that has been moved to the rear focus position F of the projection lens 36, and the third shade 42 that has been moved toward the rear focus position F. Accordingly, a cut-off line of a pattern area BL1, which is formed by the first shade 38, forms a clear light distribution pattern without accompanying with the blurring of outlines or coloring. Meanwhile, since the first shade 38 is positioned at the rear focus position F, strictly speaking, the third shade 42 is not moved to the rear focus position F of the projection lens 36. For this reason, there is a possibility that blurring of outlines or coloring is generated on a pattern area BL2 formed by the third shade 42. However, the first shade 38 is moved to the rear focus position F from the rear side of the rear focus position F while being in the first inclined posture, and the third shade 42 is moved to the rear focus position F from the front side of the rear focus position F while also being in the first inclined posture. Therefore, even though the first shade 38 is positioned at the rear focus position F, the third shade 42 can approach the rear focus position F without limit. As a result, it may be possible to reduce the blurring of outlines or coloring of the pattern area BL2 sufficiently. Further, a portion near a middle area BLP of the light distribution pattern, into which a driver most frequently gazes during driving, is an area that is formed by the first shade 38 having been accurately moved to the rear focus position F and does not have the blurring of outlines or coloring, and a portion formed by the third shade 42 is an area outside the above-mentioned area. If the width of the first shade 38 is extended over the middle area as described above, a driver hardly recognizes the blurring of outlines or coloring even though the blurring of outlines or coloring is generated. Accordingly, it may be possible to suppress that a driver feels discomfort.

Meanwhile, if the width of the first shade 38 in the vehicle width direction extends to a position that includes at least an inclined portion BLC formed in the middle portion of the cut-off line and the blurring of outlines or coloring may be prevented at the position, it may be possible to prevent a driver from feeling discomfort as described above. Further, it may be possible to contribute to the reduction in the size and weight of a component by reducing the extension length of the first shade 38, that is, the size of the first shade to the minimum. Furthermore, it may be possible to reduce the size of the shade motor 44 that makes the first shade 38 advance and retreat, and to contribute the reduction in the size and cost of the entire vehicle headlamp apparatus.

Fig. 5B shows a light distribution pattern Hi for a high beam that is suitable when preceding vehicles or pedestrians do not exit. In this case, all of the first shade 38, the second shade 40, and the third shade 42 are moved to the retreat position. In this case, since there is no cut-off line, the blurring of outlines or coloring is not generated.

Fig. 5C shows a low beam for left-hand traffic DL (so-called "Dover low beam") that is suitable when traffic regulations are changed to regulations that let drivers keep to the right. In this case, the second and third shades 40 and 42 are moved to the advanced position and the first shade 38 is moved to the retreat position. The light distribution pattern DL for a low beam for left-hand traffic is formed by the second shade 40 that has been moved to the rear focus position F of the projection lens 36 and the third shade 42 that has been moved toward the rear focus position F. Accordingly, a cut-off line of a pattern area DL1, which is formed by the second shade 40, forms a clear light distribution pattern without accompanying with the blurring of outlines or coloring. On the other hand, since the second shade 40 is positioned at the rear focus position F, strictly speaking, the third shade 42 is not moved to the rear focus position F of the projection lens 36. For this reason, there is a possibility that blurring of outlines or coloring is generated on a pattern area DL2 formed by the third shade 42. However, the second shade 40 is moved to the rear focus position F from the front side of the rear focus position F while being in the second inclined posture, and the third shade 42 is moved to the rear focus position F from the front side of the rear focus position F while also being in an inclined posture. Therefore, even though the second shade 40 is positioned at the rear focus position F, the third shade 42 can approach the rear focus position F without limit. As a result, it may be possible to sufficiently reduce the blurring of outlines or coloring of the pattern area DL2. Further, a portion near a middle area DLP of the light distribution pattern, into which a driver most frequently gazes during driving, is an area that is formed by the second shade 40 having been accurately moved to the rear focus position F and does not have the blurring of outlines or coloring, and a portion formed by the third shade 42 is an area outside the above-mentioned area. If the width of the second shade 40 is extended over the middle area as described above, a driver hardly recognizes the blurring of outlines or coloring even though the blurring of outlines or coloring is generated. Accordingly, it may be possible to suppress that a driver feels discomfort.

Meanwhile, if the width of the second shade 40 in the vehicle width direction extends to a position that includes at least an inclined portion DLC formed in the middle portion of the cut-off line and the blurring of outlines or coloring may be prevented at the position, it may be possible to prevent a driver from feeling discomfort as described above. Further, it may be possible to contribute to the reduction in the size and weight of a component by reducing the extension length of the second shade 40, that is, the size of the first shade to the minimum. Furthermore, it may be possible to reduce the size of the shade motor 44 that makes the second shade 40 advance and retreat, and to contribute the reduction in the size and cost of the entire vehicle headlamp apparatus. Moreover, in the embodiment, it may be possible to perform the switching of the light distribution pattern for a basic low beam and the light distribution pattern for a low beam for left-hand traffic only through the switching of the advance and retreat positions of the first and second shades 38 and 40. That is, even though the keeping to the left and the keeping to the right are changed depending on regions, it may be possible to provide a good light distribution pattern for a low beam. Further, in the case of the export of vehicles, it is not necessary to exclusively design vehicles depending on regions. Therefore, it may be possible to reduce design cost.

Fig. 5D shows a left-side high light distribution pattern PHPL that is suitable for improving the front field of vision on a running lane when preceding vehicles do not exist on the running lane on which a subject vehicle runs and oncoming vehicles or pedestrians exist on an opposite lane. In this case, the first shade 38 is moved to the advanced position and the second and third shades 40 and 42 are moved to the retreat position. A right-side high light distribution pattern PHPL is formed by only the first shade 38 that has been moved to the rear focus position F of the projection lens 36. Accordingly, a cut-off line of a pattern area PHPL1, which is formed by the first shade 38, forms a clear light distribution pattern without accompanying with the blurring of outlines or coloring. Further, since the third shade 42 is moved to the retreat position, a pattern area PHPL2, where light is not blocked on a running lane and an illumination area is widened toward a high beam side, is formed. As a result, it may be possible to achieve light distribution where the field of vision on the running lane is widened.

Meanwhile, if preceding vehicles exist on the running lane but oncoming vehicles or pedestrians do not exist on the opposite lane, it may be possible to form a right-side high light distribution pattern PHPL that forms a high beam only on the opposite lane. In this case, only the second shade 40 is moved to the advanced position, so that the right-side high light distribution pattern PHPL symmetrical with respect to a vertical line V in Fig. 5D is formed.

When the side high light distribution pattern PHPL is to be formed, the same side high light distribution patterns PHPL may be formed by the vehicle headlamp apparatus 10, which are disposed on the left and right sides of the vehicle, and superimposed. Further, after the side high light distribution pattern PHPL is formed by one of the left and right vehicle headlamp apparatus 10 and a light distribution pattern for a basic low beam is formed by the other thereof, the light distribution patterns may be superimposed. In this case, the light distribution pattern shown in Fig. 5A is not superimposed on a portion, which is positioned above a horizontal line H, of a pattern area PHPL2 corresponding to a high beam area. For this reason, the portion above the horizontal line is darker than a portion below the horizontal line H. However, since it may be possible to irradiate a portion that has not been irradiated in the past, it may be possible to significantly contribute to the improvement of the range of view of a driver.

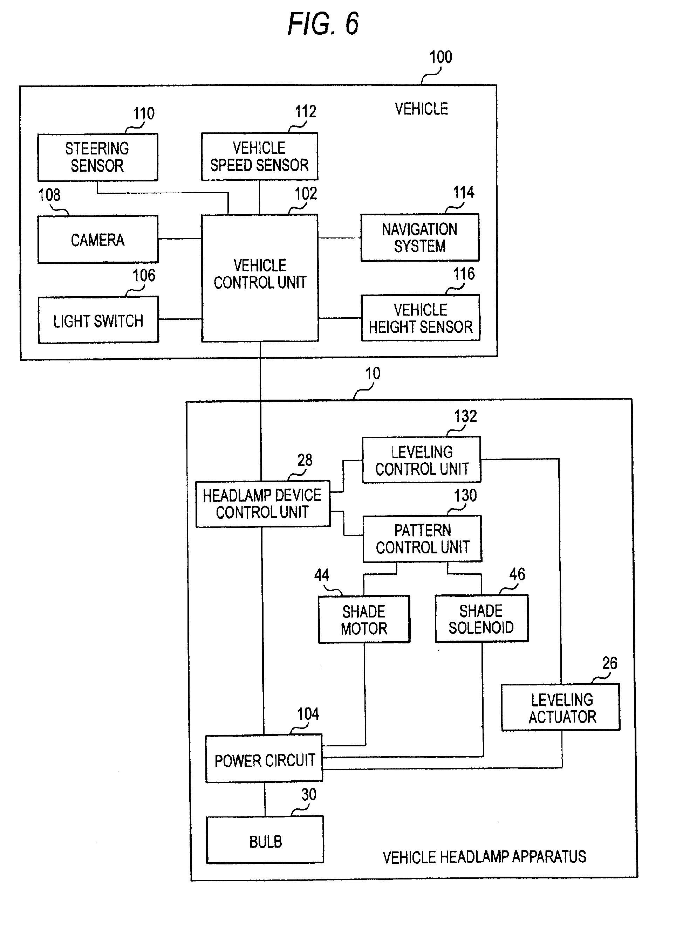

Fig. 6 is a functional block diagram illustrating the configuration of a headlamp device control unit 28 of the vehicle headlamp apparatus 10 having the above-mentioned structure and a vehicle control unit 102 mounted on a vehicle 100. The headlamp device control unit 28 of the vehicle headlamp apparatus 10 controls the bulb 30 to be turned on or off by controlling a power circuit 104 in accordance with the instruction of a vehicle control unit 102 that is mounted on the vehicle 100. Further, the headlamp device control unit 28 controls a pattern controller 130 for operating the shade motor 44 and the shade solenoid 46, and a leveling control unit 132 for operating the leveling actuator 26 in accordance with the instruction from the vehicle control unit 102.

In the case of the embodiment, a light distribution pattern formed by the vehicle headlamp apparatus 10 may be switched according to the operation of a light switch 106 that is performed by a driver. That is, the headlamp device control unit 28 changes the moving states of the first shade 38, the second shade 40, and the third shade 42 by controlling the shade motor 44 and the shade solenoid 46 through the pattern controller 130.

Further, the vehicle headlamp apparatus 10 according to the embodiment detects the circumstances around the vehicle by various sensors without the instruction of the light switch 106, and may be automatically controlled so as to form a light distribution pattern suitable for the circumstances around the vehicle. For example, if it may be possible to detect that preceding vehicles, oncoming vehicles, pedestrians, or the like exist on the front side of a subject vehicle, the vehicle control unit 102 determines that a light distribution pattern for a low beam should be formed to prevent glare. Further, a light distribution pattern for a basic low beam, where a predetermined amount of light emitted from the bulb 30 is blocked by the first and third shades 38 and 42, is formed by the control of the headlamp device control unit 28. Meanwhile, in this case, on the basis of a region, a lane, or the like where a vehicle runs, it may be determined whether to form a light distribution pattern for a basic low beam using the first shade 38 or a light distribution pattern for a low beam for left-hand traffic using the second shade 40. Furthermore, if it may be possible to detect that preceding vehicles, oncoming vehicles, pedestrians, or the like do not exist on the front side of a subject vehicle, the vehicle control unit determines that a light distribution pattern for a high beam having a wide irradiation range should be formed to improve the range of view of a driver. Moreover, a light distribution pattern for a high beam, where light is not blocked by the first shade 38, the second shade 40, and the third shade 42 is formed. Likewise, if preceding vehicles do not exist and oncoming vehicles or pedestrian exist in a region where drivers should keep to the left according to traffic regulations, the left-side high light distribution pattern for is formed only on a running lane. Further, if only preceding vehicles exist and oncoming vehicles or pedestrian do not exist, a right-side high light distribution pattern for is formed only on an opposite lane.

A camera 108, such as a stereoscopic camera, as means for recognizing an object is connected to the vehicle control unit 102 of the vehicle 100 in order to detect objects, such as preceding vehicles, oncoming vehicles, or pedestrians. If an image, which includes feature points representing a vehicle or a pedestrian stored in advance, exists in the image data from the camera 108, the vehicle control unit 102 provides information to the headlamp device control unit 28 so as to form the most suitable light distribution pattern considering the vehicle or the pedestrian. Meanwhile, detection sensors for detecting an object, which is positioned on the front side of the vehicle and for which irradiation performed by the vehicle headlamp apparatus 10 needs to be suppressed, may be appropriately changed. Other detection sensors, such as a millimeter-wave radar system and an infrared radar system, may be used instead of the camera 108. Further, these may be combined with each other. The camera 108 may be a camera that is exclusively used for the control of the vehicle headlamp apparatus 10, and may be a camera that is shared with other systems. This control mode may be referred to as an image recognizing mode.

Furthermore, the vehicle control unit 102 may also acquire information from a steering sensor 110, a vehicle speed sensor 112, and the like that are generally mounted on the vehicle 100, and may select a light distribution pattern that is formed according to the running state or running posture of the vehicle 100. For example, the vehicle control unit 102 may achieve a "swivel function" for directing the middle of the light distribution pattern to a turning direction by rotating the lamp unit 18 in the turning direction so as to improve the range of view in the turning direction if the vehicle control unit 102 determines that a vehicle turns on the basis of the information from the steering sensor 110. Moreover, a left-side high light distribution pattern or a right-side high light distribution pattern may be formed by making the first shade 38 or the second shade 40 advance and retreat according to the turning direction. This control mode may be referred to as a turning sensing mode. Meanwhile, a swivel mechanism is formed of, for example, a turning table that is disposed on the lower surface of an adaptive shade unit 34 and is driven by a motor, or a mechanism that rotates an aiming adjustment screw by the driving of a motor.

Further, when a vehicle runs at a high speed at night, it is preferable that a headlamp illuminate preceding vehicles or oncoming vehicle approaching from a distance, and road signs or message boards so as to recognize the preceding vehicles or the oncoming vehicles and the road signs or the message boards as quickly as possible. Furthermore, on the basis of the information from the vehicle speed sensor 112, the vehicle control unit 102 may perform a control so as to form a light distribution pattern for a low beam corresponding to a highway mode, which is formed by modifying a part of the light distribution pattern, during the high-speed running. This control may drive the leveling actuator 26 by the leveling control unit 132 and move up an optical axis in the range of, for example, 0.2 to 0.6 degrees while the first and third shades 38 and 42 are fixed at a position where the light distribution pattern for a basic low beam is formed. This control makes it possible to improve visibility from a distance. This control mode may be referred to as a speed sensing mode.

In addition, the vehicle control unit 102 may acquire the installation information of road signs, the shape information or form information of a road, and the like from a navigation system 114. If these types of information are acquired in advance, it may be possible to smoothly form a light distribution pattern suitable for a running road. Further, it may be possible to finely adjust the height of a cut-off line of the light distribution pattern for a low beam in a vertical direction by driving the leveling actuator 26. For example, if an uphill road exists on the front side of a vehicle, it seems that a road extends above an H line when seen from a driver. In this case, an irradiation range is adjusted so that a cut-off line further ascends along a road surface than usual. In contrast, if a downhill road exists on the front side of a vehicle, a cut-off line further descends than usual. This control makes it possible to emit light suitable for unevenness of the road surface. This control mode may be referred to as a navigation sensing mode. Meanwhile, the shape or unevenness of a road may be recognized on the basis of the information from the camera 108.

Further, the vehicle control unit 102 may acquire the height information of the current subject vehicle from a vehicle height sensor 116. The posture of the vehicle varies depending on passengers or loads. Further, the posture of the vehicle is also changed during acceleration. If the posture of the vehicle is changed, the height of the optical axis is also changed in accordance with the change of the posture of the vehicle. That is, a light distribution pattern, which is formed by the shade shape combined by the movement of the first and third shades 38 and 42, is changed in a vertical direction. Meanwhile, the vehicle control unit 102 acquires the current posture information of the vehicle by detecting the expansion and contraction states of a suspension of each wheel through the vehicle height sensor 116. Further, the vehicle control unit 102 provides the posture information to the headlamp device control unit 28. The headlamp device control unit 28 controls the leveling control unit 132 according to the acquired posture information and drives the leveling actuator 26. Accordingly, the optical axis is adjusted so that a light distribution pattern formed by the first and third shades 38 and 42 is irradiated to the most suitable position according to the running state. It may be possible to provide high-quality light irradiation by this control. This control mode may be referred to as a vehicle height sensing mode. Meanwhile, even when the second and third shades 40 and 42 are moved to the advanced position and form the light distribution pattern for a low beam for left-hand traffic, the above-mentioned control can be performed and the same advantages are obtained.

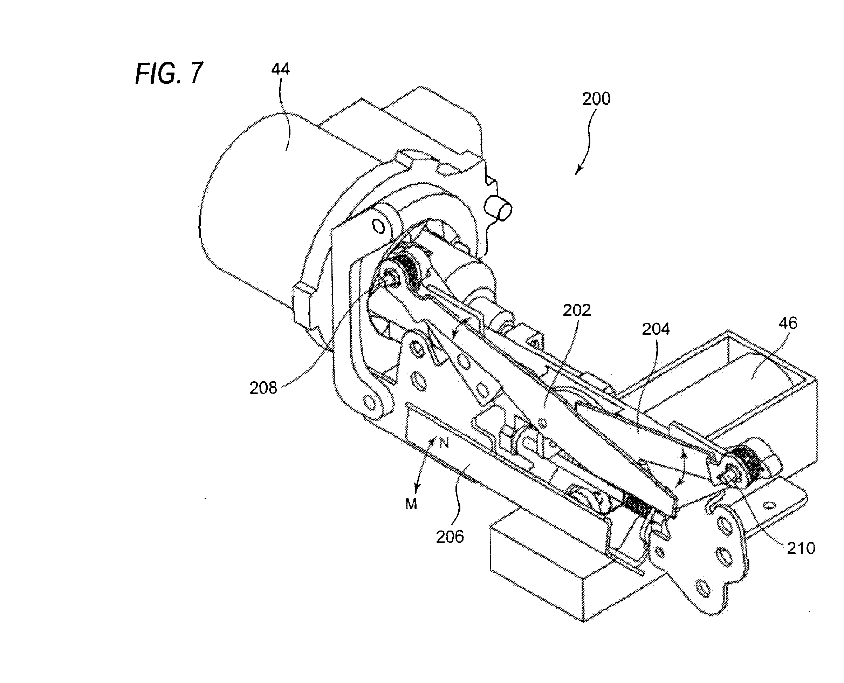

Meanwhile, in the example shown in Fig. 2 or 3A to 3D, there has been proposed a case where each of the first and second shades 38 and 40 has a width in the vehicle width direction so as to block light over the middle area of the light distribution pattern for a low beam. In this case, if the side high light distribution pattern is formed, a side high formation area is separated from the vertical line V by a distance as much as the first shade 38 extends over the middle area for example, as shown in Fig. 5D. As a result, a partial area Z of the brightest hot zone is shielded near the middle of the light distribution pattern. Meanwhile, Fig. 7 shows another adaptive shade unit 200 for solving this trouble. The width of one shade of first and second shades of the adaptive shade unit 200 in the vehicle width direction corresponds to the entire width of the light distribution pattern for a low beam, and the width of the other shade in the vehicle width direction corresponds to the width that shields the light distribution pattern for a low beam up to the middle area of the light distribution pattern. Further, a third shade corresponds to the width that forms the entire light distribution pattern for a low beam different from the entire light distribution pattern for a low beam formed by the first or second shade.

Specifically, the width of the first shade 202 in the vehicle width direction corresponds to the width that forms the entire light distribution pattern for a low beam for left-hand traffic. Further, the width of the second shade 204 in the vehicle width direction corresponds to the width that forms the light distribution pattern for a low beam up to the middle area of the light distribution pattern, that is, the width that blocks light on an opposite lane. Further, the third shade 206 corresponds to the width that forms the entire light distribution pattern for a basic low beam. Meanwhile, as the first and second shades 38 and 40 shown in Fig. 2, the first and second shades 202 and 204 are connected to each other by a link arm of a link mechanism that is operated by a shade motor 44. Further, according to the rotation direction of the link arm, any one of the first and second shades 202 and 204 is moved to the advanced position and the other thereof is moved to the retreat position. Furthermore, the first and second shades 202 and 204 are supported by rotating shafts 208 and 210, respectively, like a cantilever, and are moved between the advanced position and the retreat position by the arc-shaped motions. In this case, if a rotating shaft 208 of the first shade 202 is disposed so as to be in an elevating posture toward the front side of a vehicle, the first shade 202 may also be moved while being in an elevating posture. In this case, the first shade 202 is moved so as to approach the rear focus position F of the projection lens 36 as approaching the advanced position, and is moved so as to become distant from the rear focus position F as approaching the retreat position. Likewise, if a rotating shaft 210 of the second shade 204 is disposed so as to be in a depressing posture toward the front side of a vehicle, the second shade 204 may also be moved while being in a depressing posture. Even in this case, the second shade 204 is moved so as to approach the rear focus position F of the projection lens 36 as approaching the advanced position, and is moved so as to become distant from the rear focus position F as approaching the retreat position. As a result, the first and second shades 202 and 204 do not interfere with each other, and may be moved while using the rear focus position F as the advanced position.

Moreover, as the structure shown in Fig. 1, the third shade 206 is a plate-shaped member that has a bent portion near the middle thereof in a longitudinal direction. Further, when a rod 46a is received in the shade solenoid 46, the third shade is rotated about a rotating shaft 42a in a direction of an arrow M and is moved to the retreat position. Furthermore, when the rod 46a protrudes from the shade solenoid 46, the third shade is rotated about the rotating shaft 42a in a direction of an arrow N, is moved to the advanced position, and is stopped at the rear focus position F as the advanced position.

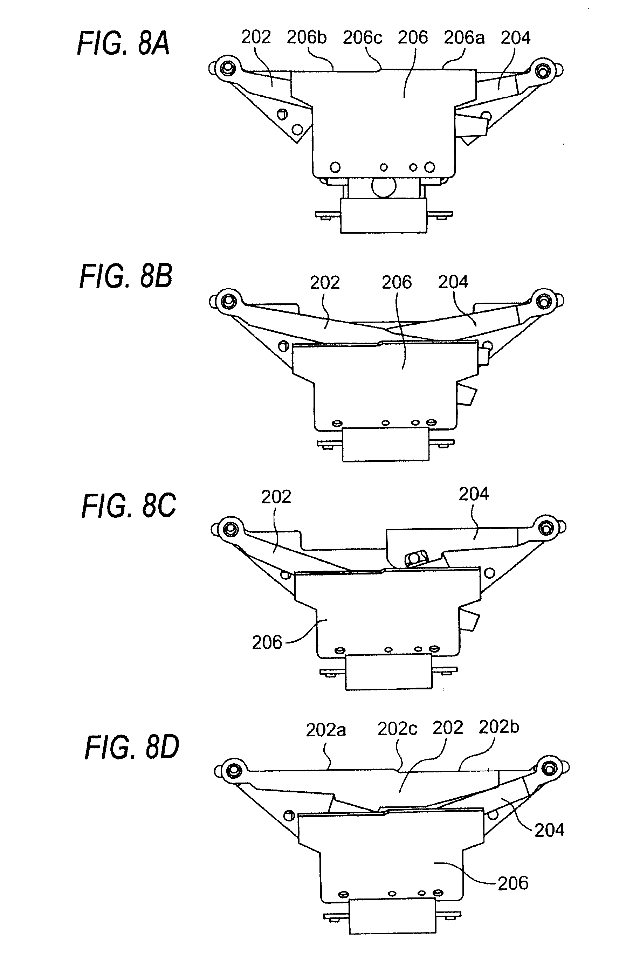

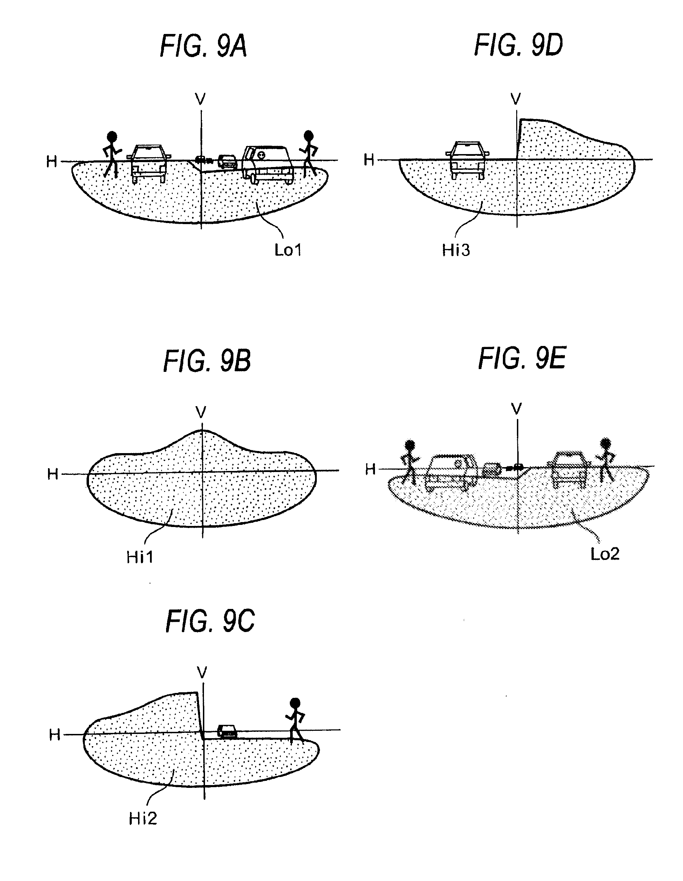

Fig. 8 shows an example of the shade shape that is formed through the operation of the first shade 202, the second shade 204, and the third shade 206. Fig. 9 shows a light distribution pattern corresponding to the shade shape.

Fig. 8A shows a shade shape that forms a light distribution pattern for a basic low beam suitable in a region where drivers should keep to the left according to traffic regulations, and shows that the third shade 206 is moved to the advanced position and the first and second shades 202 and 204 are moved to the retreat position. Meanwhile, Figs. 8A to 8D are views of the respective shades when the shades are seen from the front side of the vehicle headlamp apparatus 10 toward the bulb 30. Fig. 9A shows a light distribution pattern Lo1 for a basic low beam that is formed by the shade shape shown in Fig. 8A. The third shade 206 has a shade shape where a horizontal portion 206a corresponding to the opposite lane, a horizontal portion 206b corresponding to the running lane, and an inclined portion 206c connecting the horizontal portions 206a and 206b are formed. As shown in Fig. 9, the light distribution pattern Lo1 for a basic low beam is a light distribution pattern that is considered not so as to give a glare to oncoming vehicles or pedestrians while vehicles keep to the left. In this case, since it may be possible to form the entire light distribution pattern Lo1 for a basic low beam by only the third shade 206, the coloring or blurring of an outline of a cut-off line is not generated. Further, since the shape of the light distribution pattern is determined by the positioning of the only third shade 206, it may be possible to form a high-quality light distribution pattern.

Fig. 8B shows a shade shape that forms a light distribution pattern for a high beam, and shows that all of the first shade 202, the second shade 204, and the third shade 206 are moved to the retreat position. Fig. 9B shows a light distribution pattern Hi 1 for a high beam that is formed by the shade shape shown in Fig. 8B.

Fig. 8C shows a shade shape that forms a left-side high light distribution pattern, and shows that the only second shade 204 is moved to the advanced position and the first and third shades 202 and 206 are moved to the retreat position. Fig. 9C shows a left-side high light distribution pattern Hi2 that is formed by the shade shape shown in Fig. 8C. As described above, the width of the second shade 204 in the vehicle width direction corresponds to the width that shields the light distribution pattern for a low beam up to the middle area on the opposite lane. Accordingly, a high beam area to be formed can approach a vertical line V, and it maybe possible to form a left-side high light distribution pattern that can efficiently illuminate the running lane without shielding a hot zone of the high beam area. Meanwhile, only one side high light distribution pattern may be formed due to the structure of the first shade 202, the second shade 204, and the third shade 206 of the embodiment. Accordingly, for example, when a left-side high light distribution pattern is to be formed, the shade shape shown in Fig. 8C is formed by the vehicle headlamp apparatus 10 disposed on the left side of the vehicle and the shade shape shown in Fig. 8A is formed by the vehicle headlamp apparatus 10 disposed on the right side of the vehicle. That is, a left-side high light distribution pattern and a light distribution pattern for a basic low beam are formed and superimposed. In this case, the light distribution pattern for a basic low beam is not superimposed on a portion, which is positioned above a horizontal line H, of a portion corresponding to a high beam area. For this reason, the portion above the horizontal line is darker than a portion below the horizontal line H. However, since a portion of the light distribution pattern for a basic low beam, which has not been irradiated in the past, is irradiated, it may be possible to significantly contribute to the improvement of the range of view of a driver.

Fig. 9D shows a right-side high light distribution pattern Hi3. In this case, the right-side high light distribution pattern is formed by the vehicle headlamp apparatus 10 disposed on the right side of the vehicle. In Fig. 7, the width of the first shade 202 in the vehicle width direction corresponds to the width that shields the light distribution pattern for a low beam up to the middle area on the running lane, and the width of the second shade 204 in the vehicle width direction corresponds to the width that forms the entire light distribution pattern for a low beam for left-hand traffic. Meanwhile, the vehicle headlamp apparatus 10 disposed on the left side forms the shade shape shown in Fig. 8A. As a result, the right-side high light distribution pattern Hi3 is formed by forming the right-side high light distribution pattern and the light distribution pattern for a basic low beam and superimposing the right-side high light distribution pattern and the light distribution pattern for a basic low beam.

Fig. 8D shows a shade shape that forms a light distribution pattern for a low beam for left-hand traffic used in a region where drivers should keep to the right according to traffic regulations, and shows that the only first shade 202 is moved to the advanced position and the second and third shades 204 and 206 are moved to the retreat position. Fig. 9E shows a light distribution pattern Lo2 for a low beam for left-hand traffic that is formed by the shade shape shown in Fig. 8D. The first shade 202 has a shade shape where a horizontal portion 202a corresponding to the opposite lane, a horizontal portion 202b corresponding to the running lane, and an inclined portion 202c connecting the horizontal portions 202a and 202b are formed. As shown in Fig. 9, the light distribution pattern Lo2 for a low beam for left-hand traffic is a light distribution pattern that is considered not so as to give a glare to oncoming vehicles or pedestrians while vehicles keep to the right. In this case, it may be possible to form the light distribution pattern Lo2, which is the entire light distribution pattern DL for a low beam for left-hand traffic, by only the first shade 202. Accordingly, the coloring or blurring of an outline of a cut-off line is not generated. Further, since the shape of the light distribution pattern is determined by the positioning of the only first shade 202, it may be possible to form a high-quality light distribution pattern.

As described above, in the case of the structure shown in Figs. 7 and 8, the light distribution pattern for a basic low beam, the light distribution pattern for a low beam for left-hand traffic, and the side high light distribution pattern are formed by exclusive shades, respectively. Further, the first and second shades 202 and 204 approach the rear focus position F of the projection lens 36 while being in the first and second inclined postures, respectively. Accordingly, the first and second shades can accurately advance to the rear focus position F while not interfering with each other, and may be smoothly moved to the retreat position. When the third shade 206 is moved to the advanced position while avoiding the interference with a drive mechanism of the first shade 202 or the second shade 204 by the bent portion, the third shade may be moved to the rear focus position F. Accordingly, it may be possible to reliably prevent the coloring or blurring of an outline of a cut-off line from being generated.

Meanwhile, the third shade has been rotated in each of the above-mentioned embodiments. However, for example, like the first and the second shades, the third shade may be adapted to approach and be separated from the rear focus position F with the inclination different from the inclination of the first or second shade while being in the inclined posture, and the same advantages may be obtained. Further, in the above-mentioned embodiment, the inclined postures of the first and second shades have corresponded to the elevating posture and the depressing posture. However, if inclination angles of the first and second shades are different from each other, each of the inclined postures of the first and second shades may be the elevating posture or depressing posture.

Furthermore, the first and second shades, which are rotated while being in the inclined posture, have been exemplified in the embodiment. However, even though the first and second shades are linearly moved while being in the inclined posture, it may be possible to obtain the same advantages as the advantages of the embodiment.

The invention is not limited to each of the above-mentioned embodiments, and may be modified in design on the basis of the knowledge. The structure shown in each drawing is illustrative, and may be appropriately modified as long as the same function is achieved, so that it may be possible to obtain the same advantages.

As described above, according to the invention, there is provided a vehicle headlamp apparatus that is capable to suppress the blurring of outlines or coloring of a light distribution pattern to be formed and does not cause mechanical interference even when a plurality of shades is used.

Although the embodiment according to the present invention have been described above, the present invention is not limited to the above-mentioned embodiment but can be variously modified. Constituent components disclosed in the aforementioned embodiment may be combined suitably to form various modifications. For example, some of all constituent components disclosed in the embodiment may be removed or may be appropriately combined.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A vehicle headlamp apparatus comprising:
a light source that emits light;
a projection lens that projects the light toward a front area of a vehicle;
a first shade that is configured to advance to and retreat from an optical axis of the light source, the first shade forming a part of the shape of a light distribution pattern for a low beam in at least an opposite lane area by blocking a part of light emitted from the light source at an advanced position being set at a rear focus position of the projection lens, and allowing a light distribution pattern for a high beam to be formed at a retreat position;
a second shade that is configured to advance to and retreats from the optical axis of the light source, the second shade forming a part of the shape of a light distribution pattern for a low beam in at least a running lane area by blocking a part of light emitted from the light source at an advanced position being set at the rear focus position of the projection lens, and allowing a light distribution pattern for a high beam to be formed at a retreat position;
a third shade that is configured to advance to and retreat from the optical axis of the light source, the third shade forming a part of the shape of at least a light distribution pattern for a low beam by blocking a part of light emitted from the light source at an advanced position that includes the rear focus position of the projection lens, and allowing a light distribution pattern for a high beam to be formed at a retreat position; and
a pattern controller that determines the shape of a light distribution pattern to be formed, by controlling the advance and retreat positions of the first shade, the advance and retreat positions of the second shade, and the advance and retreat positions of the third shade,
wherein the first shade is arranged in a vehicle width direction so as to freely advance to and retreat from the optical axis while being in a first inclined posture,
wherein the second shade is arranged in a vehicle width direction so as to freely advance to and retreat from the optical axis while being in a second inclined posture, and
wherein at least one of the first and second shades has a width in the vehicle width direction so as to block the light over a middle area of the light distribution pattern for a low beam to be formed.

2. The vehicle headlamp apparatus according to claim 1,
wherein each of the first and second shades has a width in the vehicle width direction so as to block the light over the middle area of the light distribution pattern for a low beam.

3. The vehicle headlamp apparatus according to claim 1 or 2,
wherein the width of the first or second shade in the vehicle width direction extends to a position that includes at least an inclined portion formed in a middle portion of a cut-off line of a light distribution pattern for a low beam.

4. The vehicle headlamp apparatus according to claim 1,
wherein the width of one of the first and second shades in the vehicle width direction corresponds to a width that forms the entire light distribution pattern for a low beam, and the width of the other thereof in the vehicle width direction corresponds to a width that forms the light distribution pattern for a low beam up to the middle area of the light distribution pattern for a low beam, and
wherein the third shade corresponds to the width that forms the entire light distribution pattern for a low beam different from the entire light distribution pattern for a low beam formed by the first or second shade.
